# EUROPEAN PATENT SPECIFICATION

(11) **EP 2 681 480 B1**
(45) Date of publication and mention of the grant of the patent: **26.06.2019**
(21) Application number: 12752516.0
(22) Date of filing: 27.02.2012
(51) Int. Cl.: F02M 26/14, F02M 26/12, F16L 27/113, F16L 27/02, F01N 13/18

(54) **PIPE UNIT IN A CONDUIT FOR A GASEOUS MEDIUM**
ROHREINHEIT IN EINER LEITUNG FÜR EIN GASFÖRMIGES MEDIUM
UNITÉ DE TUBE DANS UN PIPELINE POUR MILIEU GAZEUX

(30) Priority: 03.03.2011 SE 1150193
(43) Date of publication of application: 08.01.2014
(73) Proprietor: Scania CV AB, 151 87 Södertälje (SE)
(72) Inventor: HAMBERG, Stefan, S-146 30 Tullinge (SE)
(74) Representative: Scania CV AB
(86) International application number: PCT/SE2012/050215
(87) International publication number: WO 2012/118431

(56) References cited:
- EP-A2- 1 026 376
- DE-A1- 3 544 712
- DE-A1- 19 833 617
- FR-A- 1 253 963
- GB-A- 1 315 634
- SE-C2- 531 976
- US-A- 4 106 798
- US-A- 5 370 427

## Description

### BACKGROUND TO THE INVENTION AND PRIOR ART

The present invention relates to a pipe unit adapted to be connected between adjoining pipes in a pipeline for a gaseous medium according to the preamble of claim 1.

A known way of lowering the content of nitrogen oxides NOₓ in the exhaust gases from a combustion engine is to recirculate part of the exhaust gases to the engine inlet via a return line. A return line for recirculation of exhaust gases comprises a plurality of pipes and components such as an EGR valve and an EGC cooler for cooling of the exhaust gases before they are mixed with air and led to the engine. The return line for the exhaust gases extends from the engine's warm side where the exhaust line is situated to the engine's cold side where air is led into the engine. During operation of the engine, the various pipes and components in the return line are subject to vibrations and thermal loads. A known way of avoiding the development of excessive stresses in the return line is for adjoining pipes in the return line to be connected by contact surfaces which allow a certain mobility of the pipes relative to one another. Such contact surfaces do however increase the risk of leakage at the connections between adjoining pipes. A known practice is to use sealing rings made of cast iron or steel to seal between the contact surfaces of adjoining pipes in the pipeline, but it is difficult to achieve completely tight connections between the contact surfaces by means of rigid sealing rings made of metal.

GB 1 315 634 A discloses a flame tube fitted between two exhaust pipe sections in an exhaust manifold and a metal bellows around the tube. The bellows is clamped to each exhaust pipe section.

DE 198 33 617 refers to a connection between two pipes in a pipeline for exhaust gases. The two pipes are connected to one another by means of spherical contact surfaces so that the pipes in a fitted state have mobility relative to one another, but they cannot move relative to one another in an axial direction. A tubular gastight sleeve made of metal material is placed round the connection between the two pipes. The sleeve is firmly connected to an external surface of each pipe. Such a sleeve prevents exhaust gases which leak out between the contact surfaces of the pipes from spreading further. Setting up the aforesaid pipeline entails having to initially put the spherical contact surfaces of the two tubular elements into mutual engagement, followed by the sleeve being firmly welded to the external surfaces of the respective pipes. A welding operation as part of assembling the pipeline is time-consuming and always involves risk that the welding work might result in defects to the sleeve and the pipes.

### SUMMARY OF THE INVENTION

The object of the present invention is to propose a pipe unit with which it is possible to create a robust and tight connection to adjoining pipes in a pipeline, which connection can be effected very quickly and easily.

These objects are achieved with the pipeline for gaseous medium according to claim 1. The pipe unit is provided with a contact surface which in a connected state to a contact surface of an adjoining pipe allows mobility between the contact surfaces and hence mobility between the pipe unit and the adjoining pipe. This mobility substantially prevents the occurrence of stresses between the pipe unit and the adjoining pipe when they are subject to mechanical and thermal loads. Although the contact surface of the pipe unit and that of the adjoining pipe are arranged for mobility relative to one another, they may relatively well prevent leakage of the gaseous medium, but a certain leakage between the contact surfaces cannot be avoided. To achieve a completely tight connection between the pipe unit and the adjoining pipe, the pipe unit is provided with a tubular flexible sealing means.

The pipe unit is with advantage a pre-manufactured component in the form of a tubular body which is provided, close to at least one end portion, with a contact surface and a sealing means. Such a pipe unit may be fitted as part of the pipeline. When the pipe unit is to be connected to a pipe in a pipeline, the pipe unit's contact surface is put into engagement with that of the adjoining pipe. The flange element of the sealing means is then connected to that of the adjoining pipe by suitable connecting means. The tubular sealing means is thus connected to both the pipe unit and the adjoining pipe. In this state the tubular sealing means creates a tight closure round the contact surfaces of the pipe unit and the adjoining pipe. The tubular sealing means thus prevents any gaseous medium which passes the contact surfaces from leaking out to the surroundings. As the sealing means is flexible, it does not prevent mutual mobility between the pipeline and the adjoining pipe. The pipe unit can be removed by undoing the connecting means, thereby releasing the sealing means from the adjoining pipe and making it possible for the pipe unit to be separated from the adjoining pipe. The pipe unit can thus very quickly and easily be fitted in and removed from the pipeline.

According to a preferred embodiment of the present invention, flange elements at the other end of the tubular flexible sealing means have a fastening surface which forms an angle with a fastening surface of the flange elements of the adjoining pipe so that it is possible to connect and press the flange elements together by means of a V-clamp. A V-clamp comprises a tape-like element which can be tightened round an object by means of a screw or bolt. When the clamp's screw or bolt is tightened in this situation, the flange elements are very forcefully pressed together. This makes it possible to create a tight connection between the flexible sealing means and the adjoining pipe. The pipe unit can very quickly and reliably be fitted in and removed from a pipeline by means of a V-clamp.

According to another preferred embodiment of the present invention, the tubular flexible sealing means takes the form of a bellows-like tube. A bellows-like tube may be bent in substantially all directions. It can also change length in an elastic way. A bellows-like sealing means thus allows most kinds of mutual movements between the pipe unit and the adjoining pipe. The bellows-like sealing means is with advantage so configured as to be capable of withstanding high pressures and high temperatures of the gaseous medium. The bellows-like tube is with advantage made of metal material with suitable characteristics.

According to another preferred embodiment of the present invention, the contact surface of the tubular body and the contact surface of the adjoining pipe are so configured that the pipe unit is movable axially relative to the adjoining pipe and may be positioned at an angle to the adjoining pipe when they are in a connected state. A pipe unit which can be positioned at an angle relative to an adjoining pipe effectively prevents the occurrence of stresses at the connection between the pipes when they are subject to vibrations. When the pipes in the pipeline are warmed by the gaseous medium, they undergo longitudinal expansion. A pipe unit which can move in an axial direction relative to an adjoining pipe effectively prevents such longitudinal expansion of the pipes from causing stresses at the connection.

According to another preferred embodiment of the present invention, the contact surface of the tubular body takes the form of a portion of an external surface of the tubular body where the external surface is of convex shape, and the contact surface of the adjoining pipe takes the form of part of an internal surface of the pipe which is at a constant distance from a centreline through the pipe. The contact surface of the pipe unit takes with advantage the form of part of a spherically shaped surface. The contact surface of the pipe unit may in this case both be positioned at an angle and move in an axial direction relative to the contact surface of the adjoining pipe. The contact surface of the tubular body may take the form of an external surface of an annular contact means fastened to said end portion of the tubular body. The annular contact means may be fastened to the end portion of the tubular body by brazing, welding, contraction etc. Such an annular contact means makes it easy for the tubular body to be provided with a suitably shaped contact surface. Alternatively, the contact surface may be a homogeneous portion of the tubular body.

According to another preferred embodiment of the present invention, the firm connection of the tubular flexible sealing means to the external surface of the tubular body comprises a welded connection. A welded connection is a relatively easy way of achieving a gastight firm connection between the tubular flexible sealing means and the pipe unit. As the sealing means is welded firmly to the pipe unit before the pipe unit is fitted in the pipeline, the welding operation may be performed at a desired location under controlled conditions, substantially eliminating the risk of defects to the pipe unit.

According to another preferred embodiment of the present invention, the pipe unit is provided with contact surfaces and sealing means close to both of its end portions. This makes it easy for the pipe unit to be fitted between two adjoining pipes in a pipeline. With advantage, the contact surface and the sealing means are similar in shape and size at both end portions of the pipe unit. Fitting the pipe unit is thus further facilitated in that it makes no difference which end of the pipe unit is fitted to the adjoining pipes in the pipeline.

According to another preferred embodiment of the present invention, the pipe unit is appropriate to form part of a pipeline for recirculation of exhaust gases which is at least partly fastened on a combustion engine. Pipelines for recirculation of exhaust gases extend between the engine's warm side where the exhaust gases are led out and the engine's cold side where air is led into the engine. It is therefore advantageous to fasten the pipeline on the engine. The pipeline for recirculation of exhaust gases is thus subject to vibrations from the engine. A pipeline for recirculation of exhaust gases is also subject to a large thermal load when the exhaust gases are at a high temperature. The pipe unit according to the present invention is very suitable for use as a component in a pipeline for recirculation of exhaust gases in that it effectively prevents the occurrence of stresses caused by mechanical and thermal loads. The pipe unit may be appropriate for fitting in the pipeline between a manifold which receives exhaust gases from an exhaust line of the engine and a pipe which comprises an EGR valve, but it is also possible for the pipe unit to be fitted at other locations in the pipeline.

### BRIEF DESCRIPTION OF THE DRAWINGS

A preferred embodiment of the invention is described below by way of example with reference to the attached drawings, in which
- Fig. 1: depicts part of a pipeline for recirculation of exhaust gases of a combustion engine,
- Fig. 2: is a sectional view through the pipe unit in Fig. 1 in a separate state,
- Fig. 3: is a sectional view of the connection between the pipe unit and the manifold in Fig. 1 and
- Fig. 4: is a sectional view of the connection between the pipe unit and the pipe with EGR valve in Fig. 1.

### DETAILED DESCRIPTION OF A PREFERRED EMBODIMENT OF THE INVENTION

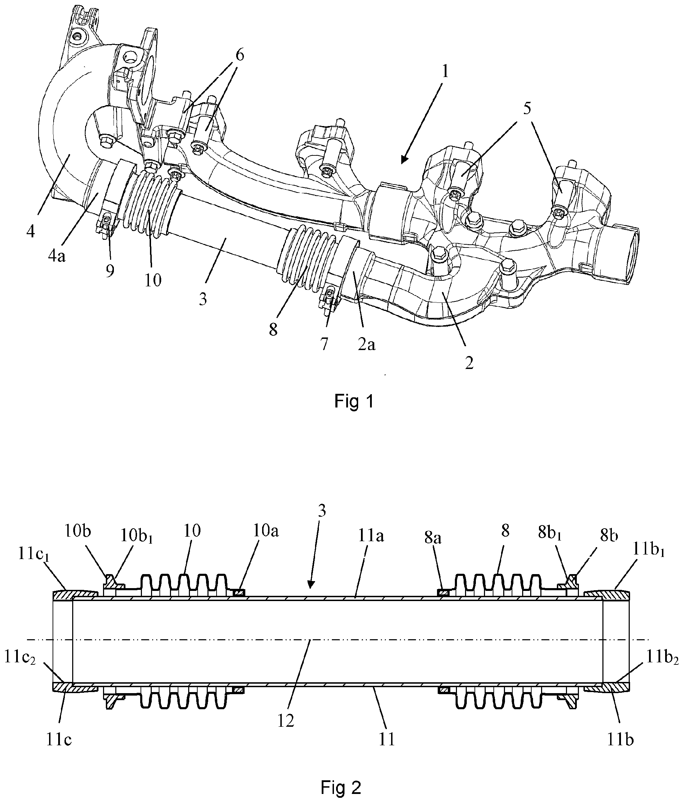

Fig. 1 depicts part of a pipeline 1 for recirculation of exhaust gases of a combustion engine. The engine may be a diesel engine. The pipeline comprises a manifold 2 for receiving exhaust gases from an undepicted exhaust line of the engine. The recirculating exhaust gases in the pipeline are led from the manifold 2 to a pipe unit 3. From the pipe unit 3 the exhaust gases are led to a pipe 4 in which there is an EGR valve. The recirculating exhaust gases are then led to an undepicted EGR cooler in which they are cooled before being mixed with air and led to the engine. The pipeline leads the recirculating exhaust gases from the engine's warm side where the exhaust line is situated to the engine's cold side where air is drawn into the engine. The manifold 2 is fastened to the engine by a number of fastening means 5 which may be bolts. The pipe 4 in which the EGR valve is situated is also fastened to the engine by a number of fastening means 6 which may be bolts.

During operation of the engine, the pipeline is subject to vibrations from the engine and to thermal loads from the warm exhaust gases. The exhaust gases in a diesel engine may be at a temperature at the order of 600-700°C. The pipe unit 3 serves in this case as a connection between the manifold 2 and the pipe 4 in which the EGR valve is situated. The pipe unit 3 is connectable detachably to a connecting portion 2a of the manifold by means of a V-clamp 7. The diameter of the connecting portion 2a of the manifold is somewhat larger than that of the rest of the manifold. This makes it possible for the pipe unit 3 to be inserted a short distance into the manifold's connecting portion 2a. The pipe unit 3 comprises a first tubular flexible sealing means 8 which provides assurance that no exhaust gases leak out at the connection between the pipe unit 3 and the manifold 2. The pipe unit 3 has an opposite end connected by a second V-clamp 9 to a connecting portion 4a of the pipe 4 in which the EGR valve is situated. Here again, the diameter of the pipe's connecting portion 4a is somewhat larger than the rest of the pipe. This makes it possible for the pipe unit 3 to be inserted a short distance into the pipe's connecting portion 4a. The pipe unit 3 comprises a second tubular flexible sealing means 10 which provides assurance that no exhaust gases leak out at the connection between the pipe unit 3 and the pipe 4 in which the EGR valve is situated.

Fig. 2 depicts the pipe unit 3 in a separate state. The pipe unit 3 is with advantage a pre-manufactured component connected to adjoining pipes 2, 4 in a pipeline 1 for recirculation of exhaust gases. The pipe unit 3 comprises a tubular body 11. The tubular body 11 comprises a pipe 11a, a first annular contact means 11b situated at one end of the pipe 11a, and a second annular contact means 11c situated at an opposite end of the pipe 11a. The annular contact means 11b, 11c are in this case identical in shape and size. Each of them has an external contact surface 11b₁, 11c₁ extending in an annular way round a centreline 12 through the tubular body 11. The external contact surfaces 11b₁, 11c₁ are of convexly curved shape. The distance between them and the centreline therefore varies somewhat in an axial direction. The external contact surfaces 11b₁, 11c₁ are situated at a larger radial distance from the centreline 12 than an external surface of the pipe 11a. Each of the annular contact means 11b, 11c has an internal surface 11b₂, 11c₂ situated at the same radial distance from the centreline 12 as an internal surface of the pipe 11a. The tubular body 11 thus has a flow duct with a constant cross-sectional area for the recirculating exhaust gases. The annular contact means 11b, 11c are firmly attached to the ends of the pipe 11a by, for example, welding, brazing or contraction.

The pipe unit 3 thus has a first tubular flexible sealing means 8 to provide assurance that no exhaust gases leak out at the connection between the pipe unit 3 and the manifold 2. The sealing means 8 is bellows-like and may be made of suitable metal material which tolerates high pressure and high temperature. The sealing means 8 is placed radially externally about the pipe 11a. The sealing means 8 has one end firmly connected to an external surface of the pipe 11a. The sealing means 8 is here provided with an annular element 8a which is firmly welded to the external surface of the pipe 11a. The sealing means 8 is provided at an opposite end with an annular flange element 8b. The flange element 8b has a radial external surface 8b₁ at an angle to the tubular body's centreline 12. The flange element 8b is fastened to an external surface of the sealing means 8 by a welded connection or the like.

The pipe unit 3 has at an opposite end a second tubular flexible sealing means 10 to provide assurance that no exhaust gases leak out at the connection between the pipe unit 3 and the pipe 4 in which the EGR valve is situated. Here again, the sealing means 10 is bellows-like and made of suitable metal material. The sealing means 10 is situated radially externally about the pipe 11a. The sealing means 10 is firmly connected at one end to an external surface of the pipe 11a. Here again, the sealing means 10 is provided with an annular element 10a which is welded firmly to the external surface of the pipe 11a. The sealing means 10 is provided at an opposite end with an annular flange element 10b. The flange element 10b has a radial external surface 10b₁ at an angle to the tubular body's centreline 12. The flange element 10b is fastened to an external surface of the sealing means 8 by a welded connection or the like.

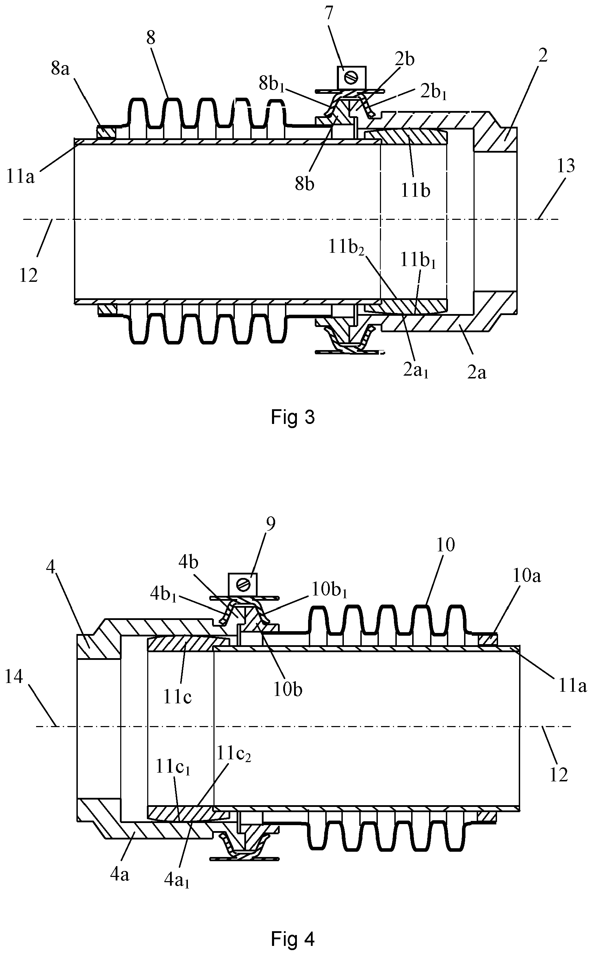

Fig. 3 depicts the connection between the pipe unit 3 and the manifold 2 in more detail. The manifold has a connecting portion 2a which is therefore somewhat larger in diameter than the rest of the manifold. The connecting portion 2a is provided with an internal contact surface 2a₁ which is arranged to come into contact with the contact surface 11b₁ of the contact means 11b when the pipe unit 3 is pushed into the connecting portion 2a. The contact surface 2a₁ of the connecting portion extends in an annular way round a centreline 13 through the manifold's connecting portion 2a. The contact surface 2a₁ is at a constant radial distance from the centreline 13. A flange element 2b is situated at one end of the connecting portion 2a. The flange element 2b is provided with a radial external surface 2b₁ which is at an angle to the centreline 13. The flange element 2b is similar in size and shape to the flange element 8b on the sealing means 8.

Fig. 4 depicts in more detail the connection between the pipe unit 3 and the pipe 4 in which the EGR valve is situated. The pipe 4 has a connecting portion 4a which is thus somewhat larger in diameter than the rest of the pipe. The connecting portion 4a is provided with an internal contact surface 4a₁ which is arranged to come into contact with the contact surface 11c₁ of the contact means 11c when the pipe unit 3 is pushed into the connecting portion 4a. The contact surface 4a₁ of the connecting portion extends in an annular way round a centreline 14 through the connecting portion 4a. The contact surface 4a₁ is at a constant radial distance from the centreline 14. A flange element 4b is situated at one end of the connecting portion 4a. The flange element 4b is provided with a radial external surface 4b₁ which is at an angle to the centreline 14. The flange element 4b is similar in shape and size to the flange element 10b on the sealing means 10.

Assembly of the pipeline 1 may be by the following procedure. The manifold 2 is initially mounted on the engine by fastening means 5. The pipe 4 in which the EGR valve is situated is mounted on the engine by fastening means 6. The contact means 11b of the pipe unit 3 is then inserted into the manifold's connecting portion 2a. The connecting portion's internal contact surface 2a₁ is at substantially the same radial distance from the centreline 13 as the maximum distance of the curved contact surface 11b₁ from the centreline 12. As the contact surface 2a₁ is at a constant distance from the centreline 13, the contact means 11b of the pipe unit 3 can be pushed into the manifold's connecting portion 2a to a desired axial position. In the fitted state, the convexly curved contact surface 11b₁ of the pipe unit 3 is in contact with the planar contact surface 2a₁ of the manifold. Such contact surfaces make it possible for the pipe unit 3 to be positioned at an angle relative to the manifold. This mobility of the pipe unit 3 makes it possible for the contact means 11c at the opposite end of the pipe unit to be pushed into the connecting portion 4a. The connecting portion's internal contact surface 4a₁ is at a radial distance from the centreline 14 which corresponds to the maximum distance of the curved contact surface 11c₁ from the centreline 12. As the contact surface 4a₁ is at a constant radial distance from the centreline 14, the contact means 11c of the pipe unit 3 can be pushed into the pipe's connecting portion 4a to a desired axial position.

The first V-clamp 7 is then applied over the flange element's sloping surfaces 2b₁, 8b₁ and tightened so that they are pressed together. A tight connection is thus achieved between the sealing means 8 and the manifold 2. As the sealing means 8 is also gastightly connected to the pipe 11a, a tight connection is at the same time created between the manifold and the pipe unit 3. The second V-clamp 9 is then applied over the flange element's sloping surfaces 4b₁, 10b₁ and tightened so that they are pressed together. A tight connection between the sealing means 10 and the pipe 4 is thus achieved. As the sealing means 10 is firmly connected at an opposite end to an external surface on the pipe 11a, a tight connection is at the same time created between the pipe unit 3 and the pipe 4 in which the EGR valve is situated. It is thus very easy to fit the pipe unit 3 in the pipeline 1. The pipes 2, 3, 4 involved may of course be fitted in some other sequence.

In the fitted state, the convexly curved contact surfaces 11b₁, 11c₁ of the pipe unit 3 are in contact with contact surfaces 2a₁, 4a₁ of the adjoining pipes 2, 4 which are at a constant distance from their respective centrelines 13, 14. Such contact surfaces make it possible for the pipe unit 3 to be positioned at an angle relative to the adjoining pipes 2, 4. The pipe unit 3 may also move in an axial direction relative to the adjoining pipes 2, 4. When the engine is in operation, vibrations are transmitted to the manifold 2 and the pipe 4 which are situated on the engine. The fact that the pipe unit 3 can be positioned at an angle relative to the adjoining pipes 2, 4 means that the vibrations from the engine create substantially no stresses at the connections between the pipe unit 3 and the adjoining pipes 2, 4. The components of the pipeline undergo warming by the recirculating exhaust gases. The change in the length of the pipe unit 3 and the adjoining pipes 2, 4 when their temperature changes results in this case in axial linear movement between the pipe unit 3 and the respective adjoining pipes 2, 4, preventing stresses from occurring at the connections between them.

The contact surfaces 11b₁, 11c₁ of the pipe unit 3 and the contact surfaces 2a₁, 4a₁ of the adjoining pipes 2, 4 prevent leakage of exhaust gases between the contact surfaces relatively well, but the sealing means 8, 10 provide assurance that any exhaust gases which leak out between the contact surfaces cannot leak further out to the surroundings. The fact that the sealing means 8, 10 are flexible does not impair the ability of the pipe unit 3 to be positioned at an angle and to move in an axial direction relative to the adjoining pipes 2, 4.

The invention is in no way restricted to the embodiment described above but may be varied freely within the scopes of the claims. In the embodiment described, the pipe unit 3 has identical sealing means 8, 10 and contact means 11b, 11c at both ends, but these components might differ in size and shape depending on what pipes they are to be connected to. The description exemplifies the invention in relation to a line for feedback of exhaust gases in a combustion engine but the invention might in alternative versions be used also in relation to other lines which form part of an exhaust system for a combustion engine and in any other applications where similar problems and requirements arise.

## Claims

1. A pipeline (1) for a gaseous medium, wherein the pipeline (1) comprises a pipe unit (3) and an adjoining pipe (2, 4), wherein the pipe unit (3) is adapted to be connected to the adjoining pipe (2,4), which pipe unit (3) comprises a tubular body (11) with two end portions and a contact surface (11b₁, 11c₁) which is close to at least one of said end portions and which is adapted to being in contact with a contact surface (2a₁, 4a₁) of the adjoining pipe (2, 4) in the pipeline (1), wherein the pipe unit (3) comprises a tubular flexible sealing means (8, 10) which at a first end (8a, 10a) is firmly attached to the external surface of the tubular body (11) and at a second end has a flange element (8b, 10b) which is detachably connectable to a flange element (2b, 4b) of the adjoining pipe (2, 4) by a connecting means (7, 9), wherein the flange element (8b, 10b) has at the second end of the tubular flexible sealing means (8, 10) a fastening surface (8b₁, 10b₁) which forms an angle with a fastening surface (2b₁, 4b₁) of the adjoining pipe's flange element (2b, 4b) so that it is possible to connect and press the flange elements (2b, 4b, 8b, 10b) together by means of a V-clamp (7, 9), wherein the contact surfaces (2a₁, 4a₁, 11b₁, 11c₁) are so configured that the pipe unit (3) in a connected state has mobility relative to the adjoining pipe (2, 4).

2. A pipeline (1) according to claim 1, **characterised in that** the tubular flexible sealing means (8, 10) is bellows-like.

3. A pipeline (1) according to any one of the foregoing claims, **characterised in that** the tubular body's contact surface (11b₁, 11c₁) and the adjoining pipe's contact surface (2a₁, 4a₁) are so configured that the pipe unit (3) is movable axially relative to the adjoining pipe (2, 4) and that the pipe unit (3) can be positioned at an angle relative to the adjoining pipe (2, 4) when they are in a connected state.

4. A pipeline (1) according to claim 3, **characterised in that** the tubular body's contact surface (11b₁, 11c₁) takes the form of part of an external surface of the tubular body (11) which is of convex shape, and that the contact surface (2a₁, 4a₁) of the adjoining pipe (2, 4) takes the form of part of an internal surface of the pipe (2, 4) which is at a constant distance from a centreline (13, 14) through the pipe (2, 4).

5. A pipeline (1) according to claim 4, **characterised in that** the tubular body's contact surface (11b₁, 11c₁) takes the form of an external surface of an annular contact means (11b, 11c) which is fastened to said end portion of the tubular body (11).

6. A pipeline (1) according to any one of the foregoing claims, **characterised in that** said firm connection between the tubular flexible sealing means (8, 10) and the tubular body (11) comprises a welded connection (8a, 10a).

7. A pipeline (1) according to any one of the foregoing claims, **characterised in that** the pipe unit (3) is provided with contact surfaces (11b, 11c) and sealing means (8, 10) close to both of its end portions.

8. A pipeline (1) according to any one of the foregoing claims, **characterised in that** the pipe unit (3) is arranged to form part of a pipeline (1) for recirculation of exhaust gases which is at least partly fastened on a combustion engine.

9. A pipeline (1) according to claim 8, **characterised in that** the pipe unit (3) is arranged to be fitted in the pipeline between a manifold (2) which receives exhaust gases from an exhaust line of the combustion engine and a pipe (4) in which an EGR valve is situated.

## Patentansprüche

1. Rohrleitung (1) für ein gasförmiges Medium, wobei die Rohrleitung (1) eine Rohreinheit (3) und ein angrenzendes Rohr (2, 4) umfasst, wobei die Rohreinheit (3) dazu eingerichtet ist, mit dem angrenzenden Rohr (2, 4) verbunden zu werden, wobei die Rohreinheit (3) einen rohrförmigen Körper (11) mit zwei Endabschnitten und einer Kontaktfläche (11b₁, 11c₁) umfasst, die sich nahe mindestens einem der Endabschnitte befindet und dazu eingerichtet ist, in Kontakt mit einer Kontaktfläche (2a₁, 4a₁) des angrenzenden Rohrs (2, 4) in der Rohrleitung (1) zu stehen, wobei die Rohreinheit (3) ein rohrförmiges flexibles Dichtungsmittel (8, 10) umfasst, das an einem ersten Ende (8a, 10a) fest an der externen Oberfläche des rohrförmigen Körpers (11) angebracht ist und an einem zweiten Ende ein Flanschelement (8b, 10b) aufweist, das durch ein Verbindungsmittel (7, 9) lösbar mit einem Flanschelement (2b, 4b) des angrenzenden Rohrs (2, 4) verbindbar ist, wobei das Flanschelement (8b, 10b) am zweiten Ende des rohrförmigen flexiblen Dichtungsmittels (8, 10) eine Befestigungsfläche (8b₁, 10b₁) aufweist, die einen Winkel mit einer Befestigungsfläche (2b₁, 4b₁) des Flanschelements (2b, 4b) des angrenzenden Rohrs bildet, sodass es möglich ist, die Flanschelemente (2b, 4b, 8b, 10b) mittels einer V-Klemme (7, 9) zu verbinden und zusammenzupressen, wobei die Kontaktflächen (2a₁, 4a₁, 11b₁, 11c₁) so ausgelegt sind, dass die Rohreinheit (3) in einem verbundenen Zustand eine Beweglichkeit relativ zum angrenzenden Rohr (2, 4) aufweist.

2. Rohrleitung (1) nach Anspruch 1, **dadurch gekennzeichnet, dass** das rohrförmige flexible Dichtungsmittel (8, 10) balgähnlich ist.

3. Rohrleitung (1) nach einem der vorhergehenden Ansprüche, **dadurch gekennzeichnet, dass** die Kontaktfläche (11b₁, 11c₁) des rohrförmigen Körpers und die Kontaktfläche (2a₁, 4a₁) des angrenzenden Rohrs so ausgelegt sind, dass die Rohreinheit (3) axial relativ zum angrenzenden Rohr (2, 4) beweglich ist und dass die Rohreinheit (3) relativ zum angrenzenden Rohr (2, 4) in einem Winkel positioniert werden kann, wenn sie sich im verbundenen Zustand befinden.

4. Rohrleitung (1) nach Anspruch 3, **dadurch gekennzeichnet, dass** die Kontaktfläche (11b₁, 11c₁) des rohrförmigen Körpers die Form eines Teils einer äußeren Oberfläche des rohrförmigen Körpers (11) annimmt, die eine konvexe Gestalt hat, und dass die Kontaktfläche (2a₁, 4a₁) des angrenzenden Rohrs (2, 4) die Form eines Teils einer inneren Oberfläche des Rohrs (2, 4) annimmt, die sich in einem konstanten Abstand von einer Mittellinie (13, 14) durch das Rohr (2, 4) befindet.

5. Rohrleitung (1) nach Anspruch 4, **dadurch gekennzeichnet, dass** die Kontaktfläche (11b₁, 11c₁) des rohrförmigen Körpers die Form einer äußeren Oberfläche eines ringförmigen Kontaktmittels (11b, 11c) annimmt, das am Endabschnitt des rohrförmigen Körpers (11) befestigt ist.

6. Rohrleitung (1) nach einem der vorhergehenden Ansprüche, **dadurch gekennzeichnet, dass** die feste Verbindung zwischen dem rohrförmigen flexiblen Dichtungsmittel (8, 10) und dem rohrförmigen Körper (11) eine geschweißte Verbindung (8a, 10a) umfasst.

7. Rohrleitung (1) nach einem der vorhergehenden Ansprüche, **dadurch gekennzeichnet, dass** die Rohreinheit (3) mit Kontaktflächen (11b, 11c) und Dichtungsmitteln (8, 10) nahe beider ihrer Endabschnitte versehen ist.

8. Rohrleitung (1) nach einem der vorhergehenden Ansprüche, **dadurch gekennzeichnet, dass** die Rohreinheit (3) dazu angeordnet ist, einen Teil einer Rohrleitung (1) zur Rückführung von Abgasen zu bilden, die zumindest teilweise an einem Verbrennungsmotor fixiert ist.

9. Rohrleitung (1) nach Anspruch 8, **dadurch gekennzeichnet, dass** die Rohreinheit (3) dazu angeordnet ist, in der Rohrleitung zwischen einem Verteiler (2), der Abgase von einer Abgasleitung des Verbrennungsmotors erhält, und einem Rohr (4) eingebaut zu sein, in dem sich ein AGR-Ventil befindet.

## Revendications

1. Pipeline (1) pour un milieu gazeux, dans lequel le pipeline (1) comprend une unité de tuyau (3) et un tube adjacent (2, 4), dans lequel l'unité de tuyau (3) est adaptée pour être raccordée au tube adjacent (2,4), laquelle unité de tuyau (3) comprend un corps tubulaire (11) avec deux parties d'extrémité et une surface de contact (l1bl, l1c1) qui est proche d'au moins une parmi lesdites parties d'extrémité et qui est adapté à être en contact avec une surface de contact (2a₁, 4a₁) du tube adjacent (2, 4) dans le pipeline (1), dans lequel l'unité de tuyau (3) comprend des moyens d'étanchéité flexibles tubulaires (8, 10) qui, au niveau d'une première extrémité (8a, 10a) sont solidement attachés à la surface externe du corps tubulaire (11) et à une deuxième extrémité, ils ont un élément de bride (8b, 10b) qui est relié détachable à un élément de bride (2b, 4b) du tube adjacent (2, 4) grâce à des moyens de raccordement (7, 9), dans lequel l'élément de bride (8b, 10b) a au niveau de la deuxième extrémité des moyens d'étanchéité flexibles tubulaires (8, 10) une surface de fixation (8b₁, 10b₁) qui forme un angle avec une surface de fixation (2b₁, 4b₁) de l'élément de bride du tube adjacent (2b, 4b) de sorte qu'il est possible de raccorder et de comprimer ensemble les éléments de bride (2b, 4b, 8b, 10b) aux moyens d'un collier en V (7, 9), dans lequel les surfaces de contact (2a₁, 4a₁, 11b₁, 11c₁) sont configurées de telle façon que l'unité de tuyau (3) à l'état raccordé possède de la mobilité par rapport au tube adjacent (2, 4).

2. Pipeline (1) selon la revendication 1, **caractérisé en ce que** les moyens d'étanchéité flexibles tubulaires (8, 10) sont semblables à un soufflet.

3. Pipeline (1) selon l'une quelconque des revendications précédentes, **caractérisé en ce que** la surface de contact du corps tubulaire (l1b₁, l1c₁) et la surface de contact du tube adjacent (2a₁, 4a₁) sont configurées de telle façon que l'unité de tuyau (3) est déplaçable axialement par rapport au tube adjacent (2, 4) et **en ce que** l'unité de tuyau (3) peut être positionné selon un angle par rapport au tube adjacent (2, 4) lorsqu'ils se trouvent à l'état raccordé.

4. Pipeline (1) selon la revendication 3, **caractérisé en ce que** la surface de contact du corps tubulaire (l1b₁, l1c₁) prend la forme d'une partie d'une surface externe du corps tubulaire (11) qui est de forme convexe, et **en ce que** la surface de contact (2a₁, 4a₁) du tube adjacent (2, 4) prend la forme d'une partie d'une surface interne du tuyau (2, 4) qui se trouve à une distance constante d'une ligne centrale (13, 14) à travers le tuyau (2, 4).

5. Pipeline (1) selon la revendication 4, **caractérisé en ce que** la surface de contact du corps tubulaire (l1b₁, l1c₁) prend la forme d'une surface externe des moyens de contact annulaires (l1b, l1c) qui sont fixés à ladite partie d'extrémité du corps tubulaire (11).

6. Pipeline (1) selon l'une quelconque des revendications précédentes, **caractérisé en ce que** ledit raccordement solide entre les moyens d'étanchéité flexibles tubulaires (8, 10) et le corps tubulaire (11) comprend un raccord soudé (8a, 10a).

7. Pipeline (1) selon l'une quelconque des revendications précédentes, **caractérisé en ce que** l'unité de tuyau (3) est fournie avec des surfaces de contact (l1b, l1c) et des moyens d'étanchéité (8, 10) les deux proches de ses parties d'extrémité.

8. Pipeline (1) selon l'une quelconque des revendications précédentes, **caractérisé en ce que** l'unité de tuyau (3) est conçue pour faire partie d'un pipeline (1) pour la recirculation de gaz d'échappement, qui est au moins partiellement fixée sur un moteur à combustion.

9. Pipeline (1) selon la revendication 8, **caractérisé en ce que** l'unité de tuyau (3) est conçue pour être placée dans le pipeline entre un collecteur (2) qui reçoit des gaz d'échappement depuis une conduite d'échappement du moteur à combustion et un tuyau (4) dans lequel se situe une soupape EGR.
